# EUROPÄISCHE PATENTANMELDUNG

(11) **EP 4 438 673 A1**
(43) Veröffentlichungstag der Anmeldung: **02.10.2024**
(21) Anmeldenummer: 23165801.4
(22) Anmeldetag: 31.03.2023
(51) Int. Cl.: C08L 7/00, B60C 1/00, C08K 3/36, C08K 5/00, C08L 9/06

(54) **KAUTSCHUKMISCHUNG UND REIFEN**

(71) Anmelder: Continental Reifen Deutschland GmbH, 30175 Hannover (DE)
(72) Erfinder: Schax, Fabian, 30165 Hannover (DE); Müller, Norbert, 30165 Hannover (DE); Nardi Tironi, Catarina, 30165 Hannover (DE); Lhuillier, Nadia, 30165 Hannover (DE); Lepadatu, Ana-Maria, 30165 Hannover (DE)
(74) Vertreter: Continental Corporation

(57) **Zusammenfassung**

Die Erfindung betrifft eine schwefelvernetzbare Kautschukmischung, insbesondere für den Laufstreifen von Fahrzeugluftreifen, enthaltend wenigstens folgende Bestandteile:
- zumindest einen Dienkautschuk,
- 5 bis 70 phr (Gewichtsteile, bezogen auf 100 Gewichtsteile der gesamten Kautschuke in der Mischung) zumindest eines zu mehr als 95 % auf biologisch nachwachsenden Rohstoffen basierenden Terpenharzes und
- 5 bis 250 phr aus Reisschalen-Asche hergestelltes Silika.

## Beschreibung

Die Erfindung betrifft eine schwefelvernetzbare Kautschukmischung, insbesondere für den Laufstreifen von Fahrzeugluftreifen.

Die Erfindung betrifft ferner einen Fahrzeugluftreifen mit zumindest einem Bauteil, das aus einer solchen mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Dabei bestehen Zielkonflikte zwischen den meisten der bekannten Reifeneigenschaften wie Nassgriffverhalten, Bremsverhalten, Handling-Verhalten, Rollwiderstand, Wintereigenschaften, Abriebverhalten und Reißeigenschaften. Es wurden bereits vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen.

Zusätzlich zu den vorgenannten Zielsetzungen im Hinblick auf die Mischungs- und Vulkanisateigenschaften ist man heutzutage bestrebt, in Kautschukmischungen für Fahrzeugreifen möglichst nachhaltige und umweltfreundliche Materialien einzusetzen, die Abhängigkeit von fossilen Rohstoffen zu reduzieren und den Ausstoß an Treibhausgasen zu minimieren. Ein Weg zu nachhaltigen Produkten Internal führt über das Recycling von alten, nicht mehr benötigten Produkten, wie z. B. dem Recycling von alten Reifen, wobei das recycelte Material in die Herstellung neuer Reifen zurückgeführt wird. Ein anderer Weg, die Nachhaltigkeit von Produkten zu verbessern, besteht in der Verwendung von Substanzen aus nachwachsenden Rohstoffen als Zuschlagstoffe für Kautschukmischungen. Derartige Zuschlagstoffe aus nachwachsenden Rohstoffen sind beispielsweise Pflanzenöle, Harze auf Basis nachwachsender Rohstoffe oder Reisschalen-Silika.

Letzteres ist Silika, welches aus biobasiertem Natriumsilikat aus Reishülsenasche hergestellt wird.

Die EP 3 802 152 B1 offenbart Kautschukmischungen für Reifenlaufstreifen mit einem guten Eigenschaftsprofil, die aus Reisschalen-Asche hergestelltes Silika und AMS-Harz (**A**lpha-**M**ethyl-**S**tyrol-**H**arz) enthalten.

Der Erfindung liegt die Aufgabe zugrunde, nachhaltige Kautschukmischungen für die Laufstreifen von Fahrzeugluftreifen bereitzustellen, die sich durch eine verbesserte dynamische Steifigkeit und ein verbessertes Zug-Dehnungsverhalten und dadurch im Reifen durch ein verbessertes Handlingverhalten und eine bessere strukturelle Haltbarkeit auszeichnen.

Gelöst wird diese Aufgabe erfindungsgemäß durch eine schwefelvernetzbare Kautschukmischung, insbesondere für den Laufstreifen von Fahrzeugluftreifen, die wenigstens folgende Bestandteile enthält:
- zumindest einen Dienkautschuk,
- 5 bis 70 phr (Gewichtsteile, bezogen auf 100 Gewichtsteile der gesamten Kautschuke in der Mischung) zumindest eines zu mehr als 95 % auf biologisch nachwachsenden Rohstoffen basierenden Terpenharzes und
- 5 bis 250 phr aus Reisschalen-Asche hergestelltes Silika.

Überraschenderweise hat sich herausgestellt, dass die spezielle Kombination von zumindest einem zu mehr als 95 % auf biologisch nachwachsenden Rohstoffen basierenden Terpenharzes mit aus Reisschalen-Asche hergestelltem Silika in den angegebenen Mengen in Dienkautschukmischungen zu einem erhöhten dynamischen Speichermodul und damit erhöhter Steifigkeit bei gleichzeitig verbesserten Zug-Dehnungseigenschaften, wie Zugfestigkeit und Reißdehung, und damit verbesserter struktureller Haltbarkeit führt. Bei Verwendung der erfindungsgemäßen Kautschukmischung in Laufstreifen von Fahrzeugluftreifen führt dies zu einem besseren Handlingverhalten und einer besseren strukturellen Haltbarkeit.

Die erfindungsgemäße Kautschukmischung zeichnet sich neben der verbesserten Nachhaltigkeit durch die verwendeten Zuschlagstoffe zusätzlich durch ein verbessertes Abriebverhalten, d. h. einen verringerten Abrieb, aus.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Unter dem Begriff "eines zu mehr als 95 % auf biologisch nachwachsenden Rohstoffen basierenden Terpenharzes" ist im Rahmen der vorliegenden Erfindung ein Terpenharz zu verstehen, das stofflich aus nachwachsenden Rohstoffen als Quelle hergestellt ist, wobei insbesondere pflanzliche Quellen bevorzugt sind.

Unter dem Begriff "aus Reisschalen-Asche hergestelltes Silika" ist im Rahmen der vorliegenden Erfindung ein Silika, auch Kieselsäure genannt, zu verstehen, das aus den anorganischen Verbrennungsrückständen (Asche) von Reisschalen/Reishülsen gewonnen wird. Der Begriff "aus Reisschalen-Asche hergestelltes Silika" ist dem Fachmann auch unter dem englischen Ausdruck "rice husk ash silica" (RHAS) bekannt.

Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die Dienkautschuk(e) ist bzw. sind dabei bevorzugt ausgewählt aus der Gruppe bestehend aus natürlichem Polyisopren (NR), synthetischem Polyisopren (IR), epoxidiertem Polyisopren (ENR), Butadien-Kautschuk (BR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurten, Riemen und Schläuchen, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Gemäß einer besonders bevorzugten Ausführungsform der Erfindung ist bzw. sind der bzw. die Dienkautschuk(e) ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Die erfindungsgemäße Kautschukmischung enthält 5 bis 70 phr, bevorzugt 20 bis 60 phr, besonders bevorzugt 30 bis 50 phr, zumindest eines zu mehr als 95 % auf biologisch nachwachsenden Rohstoffen basierenden Terpenharzes. Es können auch mehrere verschiedene Terpenharze in der Mischung eingesetzt werden. Vorzugsweise basiert das Terpenharz zu 100 % auf biologisch nachwachsenden Rohstoffen.

Terpenharze, die zu mehr als 95 % auf biologisch nachwachsenden Rohstoffen basieren, können z. B. aus Rohstoffen gewonnen werden, die bei der Herstellung von Duftstoffen aus Orangenschalen anfallen. Vorzugsweise basiert das Terpenharz jedoch auf Nebenprodukten, die bei Zellstoffherstellung von Nadelhölzern anfallen. Derartige Nebenprodukte sind in großen Mengen auf dem Markt verfügbar und lassen sich großtechnisch zu Terpenharzen veredeln.

Gemäß einer bevorzugten Weiterbildung der Erfindung basiert das Terpenharz nicht auf Limonen.

Vorzugsweise basiert das Terpenharz auf α- und β-Pinen. Derartige Terpenharze lassen sich aus Nebenprodukten, die bei Zellstoffherstellung von Nadelhölzern anfallen, herstellen.

Das Terpenharz, welches zu mehr als 95 % auf biologisch nachwachsenden Rohstoffen basiert, weist vorzugsweise ein mittleres Molekulargewicht M_{w} gemäß GPC von 800 bis 1500 g/mol auf. Derartige Terpenharze lassen sich gut verarbeiten und führen zu guten Reißeigenschaften.

Gemäß einer bevorzugten Weiterbildung der Erfindung weist das Terpenharz einen Erweichungspunkt von 100 bis 140 °C, vorzugsweise 110 bis 130 °C, auf.

Für ein gutes Bremsverhalten des Reifens, dessen Laufstreifen aus der erfindungsgemäßen Kautschukmischung besteht, weist das Terpenharz eine Glasübergangstemperatur Tg gemäß DSC von der 50 bis 100 °C, vorzugsweise von 50 bis 80 °C, auf.

Als Terpenharze, die gemäß der Erfindung eingesetzt werden können, können beispielsweise solche des Typs Sylvatraxx^{®} 8115 und Sylvatraxx^{®} 8125 von der Firma Kraton Chemicals SAS zum Einsatz kommen. Diese basieren zu 100 % auf biologisch nachwachsenden Rohstoffen und nicht auf Limonen.

Die erfindungsgemäße Kautschukmischung enthält 5 bis 250 phr, bevorzugt 20 bis 200 phr, besonders bevorzugt 40 bis 170 phr, aus Reisschalen-Asche hergestelltes Silika.

Bevorzugt weist das in der Kautschukmischung enthaltene aus Reisschalen-Asche hergestellte Silika eine Stickstoff-Oberfläche (BET-Oberfläche) (gemäß DIN ISO 9277 und DIN 66132) von 35 bis 400 m²/g, bevorzugt von 75 bis 320 m²/g und besonders bevorzugt von 120 bis 235 m²/g, und eine CTAB-Oberfläche (gemäß ASTM D 3765) von 30 bis 400 m²/g, bevorzugt von 70 bis 300 m²/g und besonders bevorzugt von 110 bis 230 m²/g, auf.

Ein geeignetes aus Reisschalen-Asche hergestelltes Silika mit einer BET-Oberfläche von 155 m²/g und einer CTAB-Oberfläche von 156 bis 157 m²/g ist beispielsweise unter dem Handelsnamen "Precipitated Silica K160" von der Firma FengHai (PanJin) Rice Biotechnology Co., Ltd erhältlich.

Neben dem aus Reisschalen-Asche hergestellten Silika kann die Kautschukmischung weitere, dem Fachmann für den Einsatz in Kautschukmischungen bekannte Kieselsäuren enthalten.

Zur Verbesserung der Verarbeitbarkeit und zur Anbindung des Silika an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Silika/Kieselsäure) in der Kautschukmischung eingesetzt. Die Silan-Kupplungsagenzien können auch im Gemisch eingesetzt werden.

Die in dieser Schrift verwendete Angabe phf (parts per hundred parts of filler by weight) ist dabei die in der Kautschukindustrie gebräuchliche Mengenangabe für Kupplungsagenzien für polare Füllstoffe. Im Rahmen der vorliegenden Anmeldung bezieht sich phf auf das vorhandene Silika/Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Vorzugsweise ist zumindest ein Silan-Kupplungsagens in der Kautschukmischung 3,3'-Bis(triethoxysilylpropyl)disulfid (TESPD).

Die Kautschukmischung kann weitere Füllstoffe, wie Ruße, Alumosilicate, Kreide, Stärke, Magnesiumoxid, Titandioxid, Kautschukgele, Kohlenstoffnanoröhrchen, Graphit, Graphene oder sogenannte "carbon-silica dual-phase filler" in üblichen Mengen enthalten, wobei die Füllstoffe in Kombination eingesetzt werden können.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren bei guten sonstigen Reifeneigenschaften erzielt.

Die erfindungsgemäße Kautschukmischung kann des Weiteren unterschiedliche Weichmacher enthalten. Diese sind bevorzugt in Mengen von 5 bis 50 phr, besonders bevorzugt von 5 bis 30 phr, in der Mischung enthalten.

Die Kautschukmischung kann zudem wenigstens einen Weichmacher enthalten, der bevorzugt ausgewählt ist aus der Gruppe bestehend aus Weichmachern aus nachwachsenden Rohstoffen wie Rapsöl oder Sonnenblumenöl, Mineralölen, Phosphorsäureestern wie Tri-(2-ethylhexyl)phosphat, und Flüssig-Polymere mit einem Gewichtsmittel der Molekulargewichtsverteilung M_{w} gemäß GPC von 60.000 g/mol oder weniger.

Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents), Weißölen und naphthenischen Ölen, wobei RAE besonders bevorzugt ist.

Gemäß einer vorteilhaften Weiterbildung der Erfindung wird als Weichmacher ein pflanzliches Öl eingesetzt. Dies ist aus ökologischer und ökonomischer Sicht von Vorteil und bietet in Reifen vorteilhafte Eigenschaften. Besonders bevorzugt ist, wenn das pflanzliche Öl Rapsöl ist.

Als Weichmacher kann auch ein flüssiges Polymer, beispielsweise ein flüssiges Dien-Polymer, wie flüssiges Polybutadien, eingesetzt werden. Das flüssige Polymer ist vorzugsweise gut mit den üblichen Kautschuktypen einer Laufstreifenmischung kompatibel und zeigt eine geringe Diffusionsneigung.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung in Gummiprodukten, insbesondere in Fahrzeugluftreifen, herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Sie kann in unterschiedlichen Bauteilen von Fahrzeugluftreifen zum Einsatz kommen. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur gemäß ISO 868
- Rückprallelastizität bei Raumtemperatur und 70 °C gemäß ISO 4662
- Spannungswert bei 300% Dehnung (M300) bei Raumtemperatur gemäß ISO 37
- Zugfestigkeit bei Raumtemperatur gemäß ISO 37
- Reißdehnung bei Raumtemperatur gemäß ISO 37
- Bruchenergiedichte bei Raumtemperatur bestimmt im Zugversuch, wobei die Bruchenergiedichte die bis zum Bruch erforderliche Arbeit, bezogen auf das Volumen der Probe, ist gemäß ISO 37
- Durchschnittlicher dynamischer Speichermodul (E'mittel) bei 55 °C über den Dehnungssweep aus dynamisch-mechanischer Messung bei einer Frequenz von 10 Hz gemäß ISO 4664-1
- Abrieb bei Raumtemperatur gemäß DIN/ISO 4649

Der dynamische Speichermodul (E'mittel) lässt sich mit der Steifigkeit und damit mit dem Handlingverhalten korrelieren. Ein hoher dynamischer Speichermodul E'(mittel) steht für eine höhere Steifigkeit und somit für eine bessere Handlingperformance. Die Zug-Dehnungseigenschaften, wie Zugfestigkeit und Reißdehung, lassen sich mit der strukturellen Haltbarkeit korrelieren.

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| SSBR^{a} | phr | 90 | 90 | 90 | 90 |
| flüssiges BR^{b} | phr | 12,5 | 12,5 | 12,5 | 12,5 |
| Ruß | phr | 5 | 5 | 5 | 5 |
| Kieselsäure A^{c} | phr | 115 | 115 | - | - |
| Reisschalen-Silika^{d} | phr | - | - | 115 | 115 |
| AMS-Harz^{e} | phr | 40 | - | 40 | - |
| Terpenharz^{f} | phr | - | 40 | - | 40 |
| Alterungsschutzmittel | phr | 6 | 6 | 6 | 6 |
| Ozonschutzwachs | phr | 2 | 2 | 2 | 2 |
| Zinkoxid | phr | 2 | 2 | 2 | 2 |
| Stearinsäure | phr | 1 | 1 | 1 | 1 |
| Verarbeitungshilfsmittel | phr | 6 | 6 | 6 | 6 |
| Silan-Kupplungsagenss | | 8,2 | 8,2 | 8,2 | 8,2 |
| Beschleuniger | phr | 3,7 | 3,7 | 3,7 | 3,7 |
| Schwefel | phr | 1,6 | 1,6 | 1,6 | 1,6 |

| **Eigenschaften** | | | | | |
|---|---|---|---|---|---|
| Shorehärte bei RT | ShoreA | 68,0 | 66,5 | 65,0 | 69,6 |
| Rückprallelast. bei RT | % | 17,4 | 18,6 | 17,7 | 18,2 |
| Rückprallelast. bei 70 °C | % | 42,4 | 41,7 | 42,6 | 40,8 |
| M300 bei RT | MPa | 6,8 | 5,7 | 6,1 | 6,1 |
| Zugfestigkeit bei RT | MPa | 17,6 | 15,4 | 16,6 | 17,8 |
| Reißdehnung bei RT | % | 639 | 646 | 658 | 704 |
| Bruchenergiedichte bei | J/cm³ | 44 | 39 | 43 | 51 |
| RT | | | | | |
| E'(mittel) | MPa | 9,0 | 8,7 | 8,7 | 9,2 |
| Abrieb | mm³ | 64 | 98 | 65 | 76 |

| | | | | | |
|---|---|---|---|---|---|
| ^{a} Sprintan^{®} SLR-3402, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -62 °C ^{b} LBR-302, Kuraray, flüssiges Polybutadien, T_{g} = -85 °C ^{c} ZEOSIL^{®} 1165 MP, Solvay S.A., BET-Oberfläche = 155 m²/g (gemessen mit Stickstoff), CTAB-Oberfläche = 156-157 m²/g; ^{d} Precipitated Silica K160, Fa. FengHai (PanJin) Rice Biotechnology Co., Ltd, Silika aus Reisschalen-Asche, BET-Oberfläche = 155 m²/g (gemessen mit Stickstoff), CTAB-Oberfläche = 156-157 m²/g ^{e} Sylvatraxx^{®} 4401, Kraton Chemicals SAS, Alpha-Methyl-Styrol-Harz, Erweichungspunkt = 85 °C (gemäß ASTM E 28), T_{g} = 45 °C ^{f} Sylvatraxx^{®} 8115, Kraton Chemicals SAS, nicht auf Limonen basierendes Terpenharz, Erweichungspunkt = 115 °C (gemäß ASTM E 28), T_{g} = 66 °C ^{g} 3,3'-Bis(triethoxysilylpropyl)disulfid (TESPD) | | | | | |

Aus den Daten der Tabelle 1 wird ersichtlich, dass sich durch die kombinierte Anwesenheit des Terpenharzes, welches zu mehr als 95 % auf biologisch nachwachsenden Rohstoffen basiert, mit aus Reisschalen-Asche hergestelltem Silika in der Mischung 4(E) die Zug-Dehungseigeschaften Spannungswert, Zugfestigkeit, Reißdehnung und Bruchenergiedichte, verbessern, d. h. erhöht werden, und zwar in überraschender Weise in einem Maße, das über einen additiven Effekt der Einzelmaßnahmen (alleiniger Austausch der Kieselsäure durch RHAS 3(V) und alleiniger Austausch des Alpha-Methyl-Styrol-Harzes durch Terpenharz 2(V)) bei Weitem hinaus geht. Die Mischung 4(E) weist daher eine hohe strukturelle Haltbarkeit auf. Auch der dynamische Speichermodul E' (mittel) ist bei Mischung 4(E) deutlich verbessert, d. h. erhöht, was in Laufstreifen von Fahrzeugluftreifen zu einem besseren Handlingverhalten führt.

Der Abrieb der erfindungsgemäßen Mischung ist ebenfalls niedrig, so dass die Mischung bei hoher Nachhaltigkeit ein gutes Eigenschaftsprofil aus Haltbarkeit, Handling und Abrieb aufweist.

## Patentansprüche

1. Schwefelvernetzbare Kautschukmischung, insbesondere für den Laufstreifen von Fahrzeugluftreifen, enthaltend wenigstens folgende Bestandteile:
- zumindest einen Dienkautschuk,
- 5 bis 70 phr (Gewichtsteile, bezogen auf 100 Gewichtsteile der gesamten Kautschuke in der Mischung) zumindest eines zu mehr als 95 % auf biologisch nachwachsenden Rohstoffen basierenden Terpenharzes und
- 5 bis 250 phr aus Reisschalen-Asche hergestelltes Silika.

2. Schwefelvernetzbare Kautschukmischung nach Anspruch 1, **dadurch gekennzeichnet, dass** sie 20 bis 60 phr, bevorzugt 30 bis 50 phr, zumindest eines zu mehr als 95 % auf biologisch nachwachsenden Rohstoffen basierenden Terpenharzes enthält.

3. Schwefelvernetzbare Kautschukmischung nach Anspruch 1 oder 2, **dadurch gekennzeichnet, dass** das Terpenharz zu 100 % auf biologisch nachwachsenden Rohstoffen basiert.

4. Schwefelvernetzbare Kautschukmischung nach zumindest einem der vorhergehenden Ansprüche, **dadurch gekennzeichnet, dass** das Terpenharz nicht auf Limonen basiert.

5. Schwefelvernetzbare Kautschukmischung nach zumindest einem der vorhergehenden Ansprüche, **dadurch gekennzeichnet, dass** das Terpenharz auf α- und β-Pinen basiert.

6. Schwefelvernetzbare Kautschukmischung nach zumindest einem der vorhergehenden Ansprüche, **dadurch gekennzeichnet, dass** das Terpenharz ein mittleres Molekulargewicht M_{w} gemäß GPC von 800 bis 1500 g/mol aufweist.

7. Schwefelvernetzbare Kautschukmischung nach zumindest einem der vorhergehenden Ansprüche, **dadurch gekennzeichnet, dass** das Terpenharz einen Erweichungspunkt von 100 bis 140 °C, vorzugsweise 110 bis 130 °C, aufweist.

8. Schwefelvernetzbare Kautschukmischung nach zumindest einem der vorhergehenden Ansprüche, **dadurch gekennzeichnet, dass** das Terpenharz eine Glasübergangstemperatur Tg gemäß DSC von der 50 bis 100 °C, vorzugsweise von 50 bis 80 °C, aufweist.

9. Schwefelvernetzbare Kautschukmischung nach zumindest einem der vorhergehenden Ansprüche, **dadurch gekennzeichnet, dass** sie 20 bis 200 phr, vorzugsweise 40 bis 170 phr, aus Reisschalen-Asche hergestelltes Silika enthält.

10. Schwefelvernetzbare Kautschukmischung nach zumindest einem der vorhergehenden Ansprüche, **dadurch gekennzeichnet, dass** sie 1 - 15 phf (Gewichtsteile, bezogen auf 100 Gewichtsteile Silika) zumindest eines Silan-Kupplungsagenzes enthält.

11. Fahrzeugluftreifen mit zumindest einem Bauteil, das aus einer mit Schwefel vulkanisierten Kautschukmischung nach einem der Ansprüche 1 bis 10 besteht.

12. Fahrzeugluftreifen nach Anspruch 11 mit einem Laufstreifen, dessen zumindest mit der Fahrbahn in Berührung kommender Teil aus einer mit Schwefel vulkanisierten Kautschukmischung nach einem der Ansprüche 1 bis 10 besteht.
